# EUROPÄISCHE PATENTANMELDUNG

(11) **EP 2 428 660 A2**
(43) Veröffentlichungstag der Anmeldung: **14.03.2012**
(21) Anmeldenummer: 11180101.5
(22) Anmeldetag: 05.09.2011
(51) Int. Cl.: F02B 29/04, F02M 35/10

(54) **Saugrohrgehäuse mit einem integrierten Wärmeübertragerblock**

(30) Priorität: 13.09.2010 DE 102010040661
(71) Anmelder: Behr GmbH & Co. KG, 70469 Stuttgart (DE)
(72) Erfinder: Diem, Johannes, 71287 Weissach (DE)
(74) Vertreter: Grauel, Andreas

(57) **Zusammenfassung**

Die Erfindung betrifft ein Saugrohrgehäuse mit einem integrierten Wärmeübertragerblock, der in dem Saugrohrgehäuse (1) angeordnet ist und von einem Arbeitsimedium (3) durchströmt wird, wobei das Saugrohrgehäuse (1) unter Ausbildung eines Spaltes (4) beabstandet zu dem Wärmeübertragerblocks (2) angeordnet ist und der Spalt (4) gegenüber dem Arbeitsmedium (3) verschlossen ist. Um eine Bypassströmung des Arbeitsmediums am Wärmeübertragerblock vorbei zu verhindern, ist der Spalt (4) mittels eines dichtungsfreien Spaltverschlusselementes (6, 8) abgedichtet.

## Beschreibung

Die Erfindung betrifft ein Saugrohrgehäuse mit einem integrierten Wärmeübertragerblock, der in dem Saugrohrgehäuse angeordnet ist und von einem Arbeitsmedium durchströmt wird, wobei das Saugrohrgehäuse unter Ausbildung eines Spaltes beabstandet zu dem Wärmeübertragerblock angeordnet ist und der Spalt gegenüber dem Arbeitsmedium verschlossen ist.

Aus der gattungsgemäßen DE 10 2008 061 759 A1 ist ein Saugrohrgehäuse mit einem integrierten Wärmeübertragerblock bekannt, bei weichem ein, sich zwischen dem Saugrohrgehäuse und dem Wärmeübertragerblock ausbildender Spalt mittels einer Dichtung abgedichtet ist, die sich quer zur Strömungsrichtung des Arbeitsmediums erstreckt. Diese Dichtung hat die Aufgabe, sicher zustellen, dass ein Arbeitsmedium, welches durch den Wärmeübertragerblock hindurchströmt und in diesem abgekühlt wird, nicht als unerwünschte Bypassströmung an dem Wärmeübertragerblock vorbeiströmt.

Die DE 10 2007 042 868 A1 zeigt eine Brennkraftmaschine mit einem Wärmetauscher, wobei der Wärmetauscher mittels jeweils eines beiderseits des Wärmetauschers angeordneten keilförmigen Dichtungselementes gegenüber einer Saugrohrwand dichtend fixiert ist. Die Dichtung dient dabei gleichzeitig als Befestigungsmittel des Wärmetauschers an der Saugrohrwand. Eine solche Befestigung kann sich bei den Vibrationen durch die Bewegung des Fahrzeuges lockern, wodurch eine Bypassströmung des Arbeitsmediums zwischen Saugrohrgehäuse und Wärmetauscher ermöglicht wird.

Weiterhin ist es bei den genannten Lösungen nachteilig, dass die Dichtungen jeweils eine spezielle Form aufweisen, was zusätzliche Herstellungskosten verursacht. Darüber hinaus muss der Wärmeübertragerblock jeweils mit einem speziellen Montagehilfsmittel in das Saugrohr eingeführt und abgedichtet werden.

Der Erfindung liegt somit die Aufgabe zugrunde, ein Saugrohrgehäuse mit einem integrierten Wärmeübertragerblock anzugeben, bei welchem die Lagerung und Abdichtung des Wärmeübertragerblocks in dem Saugrohrgehäuse nicht nur durch einfache Arbeitsschritte realisiert werden, sondern auch die Herstellungskosten eines solchen Saugrohrgehäuses reduziert werden.

Erfindungsgemäß wird die Aufgabe dadurch gelöst, dass der Spalt mit einem dichtungsfreien Spaltverschlusselement verschlossen ist. Dies hat den Vorteil, dass das Spaltverschlusselement nicht nur eine preisgünstige und einfach einzusetzende Abdichtung des Spaltes zwischen dem Saugrohrgehäuse und dem Wärmeübertragerblock ermöglicht, sondern gleichzeitig als Mittel zur Arretierung des Wärmeübertragerblocks am Saugrohrgehäuse dient. Mit einem solchen Mittel wird sichergestellt, dass die Position des Wärmeübertragerblocks in dem Saugrohrgehäuse bei den durch die Fahrzeugbewegungen verursachten Vibrationen annähernd immer beibehalten wird.

Vorteilhafterweise ist das Spaltverschlusselement aus einer Abwinklung eines, sich entlang des Wärmeübertragerblockes erstreckenden Metallelementes gebildet, wobei die Abwinklung in eine Ausnehmung des Saugrohrgehäuses eingreift. Mit dieser sehr einfachen Lösung, bei welcher jeweils das Metallelement zur Bildung einer L-förmigen Gestalt nur annähernd senkrecht abgekantet werden muss, entfällt die Verwendung einer zusätzlichen Dichtung, wodurch Kosten bei der Herstellung reduziert werden. Es können auch besonders preisgünstige Materialien für das Metallelement verwendet. Durch die Abwinklung und das Eingreifen der Abwinklung in das Saugrohrgehäuse wird der Spalt zwischen Saugrohrgehäuse und Wärmeübertragerblock vollständig verschlossen, so dass eine Bypassströmung des Arbeitsmediums zuverlässig verhindert wird.

In einer Ausgestaltung weist die Abwinklung und/oder eine Ausnehmung des Saugrohrgehäuses, in welche die Abwinklung eingreift, solche Abmessungen auf, dass ein Eingreifen der Abwinklung in die Ausnehmung des Saugrohrgehäuses auch bei einer, durch einen Druck des Arbeitsmediums bedingten Wölbung des Saugrohrgehäuses gewährleistet ist. Damit wird sichergestellt, dass auch, wenn sich das Saugrohrgehäuse nach außen dehnt, die Abwinklung immer noch in die Ausnehmung des Saugrohrgehäuses eingreift, so dass auch unter solchen extremen Bedingungen eine Bypassströmung verhindert wird, da der Spalt zwischen Saugrohrgehäuse und Wärmeübertragerblock zuverlässig abgeschlossen ist.

In einer Alternative ist das Spaltverschlusselement aus dem Saugrohrgehäuse gebildet, welches auf der Eintrittsseite und/oder der Austrittsseite des Arbeitsmediums teilweise über den Wärmeübertragerblock gezogen ist. Durch eine solche Ausbildung des Saugrohrgehäuses erübrigt sich die Verwendung zusätzliche Bauteile, wodurch sich der Verschluss des Spaltes zwischen Saugrohrgehäuse und Wärmeübertragerblock mit sehr einfachen Mitteln herstellen lässt, Das aus dem Saugrohrgehäuse ausgebildete Spaltverschlusselement überlappt den Wärmeübertragerblock soweit, dass der Verschluss des Spaltes auch unter extremen Bedingungen, wie beispielsweise einem hohen Druck des Arbeitsmediums, gewährleistet wird,

In einer Weiterbildung ist das Spaltverschlusselement als Vorsprung des Saugrohrgehäuses ausgebildet, welches teilweise über einen Wellrippen-Rohr-Block des Wärmeübertragerblocks gezogen ist. Ein solcher Vorsprung ist einstückig mit dem Sangrohrgehäuse zusammen in nur einem Arbeitsgang einfach herzustellen. Somit vereinfacht sich auch die Montage des Wärmeübertragerblocks in das Saugrohrgehäuse, da dieses nur eingeschoben werden muss und von dem Vorsprung des Saugrohrgehäuses positioniert wird. Der Vorsprung ist dabei so dimensioniert, dass auch bei Verwölbungen des Saugrohrgehäuses der Wärmeübertragerblock sicher auf dem Vorsprung aufsitzt und somit immer seine Position beibehält

In einer weiteren Ausführungsform erfolgt die Lagerung des Wärmeübertragers an einer Einschubleiste des Saugrohrgehäuses, welche einen Flansch aufweist, mittels dem das Saugrohrgehäuse mit dem Wärmeübertragerblock, verschraubbar ist.

Alternativ erfolgt die Lagerung des Wärmeübertragerblockes an der, mit dem Wärmeübertragerblock verschweißten. Einschubleiste des Saugrohrgehäuses. Mittels dieser einfachen Verbindungstechniken wird das Saugrohrgehäuse mit dem Wärmeübertragerblock zuverlässig verbunden, so dass ein Festlager gebildet wird, welches ein Verschieben des Wärmeübertragerblocks in seiner einmal eingenommenen Position zuverlässig verhindert.

Vorteilhafterweise weist der Wärmeübertragerblock zwei Wasserkästen auf, zwischen welchen ein Wellrippen-Rohr-Block angeordnet ist, wobei jeder Wasserkasten von einem elastischen Dichtungsring umspannt ist, welcher an dem Saugrohrgehäuse anliegt. Dieser elastische Dichtungsring bildet somit eine Fixierung des Wärmeübertragerblocks in radialer Richtung im Saugrohrgehäuse und gibt in axialer Richtung dem Wärmeübertragerblock die Möglichkeit zur thermischen Ausdehnung.

Vorteilhafterweise ist jeder Wasserkasten zur Aufnahme des elastischen Dichtungsringes mindestens an seinen Ecken abgerundet. Aufgrund dieser Ausgestaltung lässt sich der elastische Dichtungsring einfach auf den Wasserkasten des Wärmeübertragerblocks aufschieben, wo er sich selbst beim Einschieben des Wärmeübertragerblocks in das Saugrohr hält. Somit kann bei diesem Herstellungsschritt auf Montagehilfen verzichtet werden.

In einer Weiterbildung ist der elastische Dichtungsring als O-Ring ausgebildet. Dieser einfache O-Ring bildet dabei das Loslager, dessen axialer Lagersitz zwischen dem Absatz des Wasserkastens und dem Absatz am Saugrohrgehäuse ausreichend groß dimensioniert ist, so dass der Wärmeübertragerblock unter den gegebenen Produktionstoleranzen und der thermischen Ausdehnung nicht verspannt wird.

Die Erfindung lässt zahlreiche Ausführungsformen zur. Einige davon sollen anhand der in der Zeichnung dargestellten Figuren näher erläutert werden.

Es zeigt:
- Figur 1:: Spaltabdichtung mittels eines abgekanteten Seitenbleches
- Figur 2:: Spaltabdichtung mittels einer ersten Ausbildung eines Vorsprunges des Saugrohrgehäuses
- Figur 3:: Spaltabdichtung mittels einer zweiten Ausbildung des Vorsprunges des Saugrohrgehäuses
- Figur 4:: Darstellung des Loslagers des Wärmeübertragerblocks.

Gleiche Merkmale sind mit gleichen Bezugszeichen gekennzeichnet.

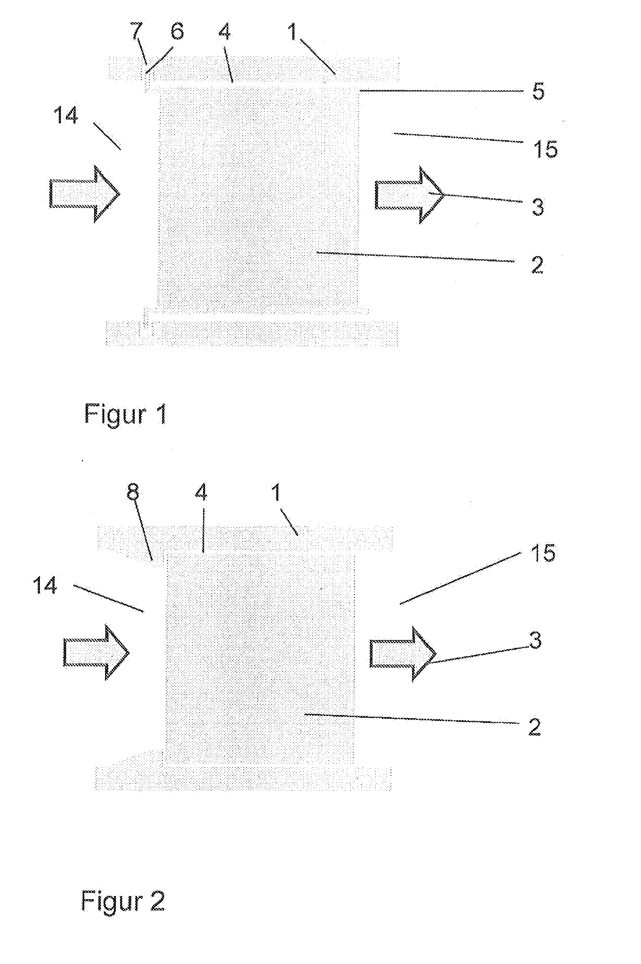

Figur 1 zeigt eine Prinzipdarstellung für ein Saugrohrgehäuse 1 mit einem integrierten Wärmeübertragerblock 2. Der Wärmeübertragerblock 2 hat dabei die Aufgabe, ein Arbeitsmedium 3, welches in das Saugrohrgehäuse 1 einströmt, abzukühlen, wobei das Arbeitsmedium 3 nach Austritt aus dem Wärmeübertragerblock 2 dem nicht weiter dargestellten Verbrennungsmotor zugeführt wird. Das Arbeitsmedium 3 kann dabei Abgas oder Ladeluft sein. Die nachfolgenden Beispiele beziehen sich alle auf einen Ladeluftkühler, der als Wärmeübertragerblock 2 ausgebildet ist, und durch welchen Ladeluft als Arbeitsmedium 3 hindurch strömt.

Zwischen dem Saugrohrgehäuse 1 und dem Wärmeübertragerblock 2, welcher in dem Saugrohrgehäuse 1 angeordnet ist, ist ein Spalt 4 ausgebildet, der abgedichtet werden muss, um sicherzustellen, dass das Arbeitsmedium 3 auch vollständig durch den Wärmeübertragerblock 2 hindurch strömt. Dies ist notwendig, damit auch das gesamte Arbeitsmedium 3 abgekühlt werden kann,

Gemäß Figur 1 erstreckt sich entlang dem Wärmeübertragerblock 2, an diesem anliegend, ein Metallelement 5 parallel zum Saugrohrgehäuse 1, welches als Seitenblech besonders einfach ausgebildet ist. Das Metallelement 5 wird auf einen Wellrippen-Rohr-Block des Wärmeübertragerblocks 2 gelegt und im Lötprozess mit diesem verlötet.
Das Metallelement 5 weist eine annähernd rechtwinklige Abwinklung 6 auf, die in Richtung des Saugrohrgehäuses 1 gerichtet ist. Das Saugrohrgehäuse 1 umfasst eine nutähnliche Ausnehmung 7, in welche die Abwinkelung 6 des Metallelementes 5 eingreift. Die Abwinklung 6 ist auf der Eintrittsseite 14 des Arbeitsmediums 3 in den Wärmeübertragerblock 2 ausgebildet und kann auch zusätzlich auf der Austrittsseite 15 des Arbeitsmediums 3 aus dem Wärmeübertragerblock 2 abgekantet werden. Das Metallelement 5 ist L-förmig ausgebildet und so dimensioniert, dass, wenn das Saugrohrgehäuse 1 sich unter einem entsprechenden Druck des Arbeitsmediums 3 nach außen wölbt, ein Eingreifen der Abwinklung 6 des Metallelementes 5 in der Ausnehmung 7 zuverlässig gegeben ist.

Für den seitlichen Einschub des Wärmeübertragerblocks 2 in das Saugrohrgehäuse 1 kann das L-förmige Metallelement 5 in der nutförmigen Ausnehmung 7 auch als Montagehilfe zum Einschieben und Positionieren des Wärmeübertragerblocks 2 verwendet werden.

Eine weitere Möglichkeit, eine Bypassströmung an dem Wärmeübertragerblock 2 vorbei zu vermeiden, besteht darin, dass auf der Eintrittsseite 14 des Arbeitsmediums 3 ein Vorsprung 8 des Saugrohrgehäuses 1 angeordnet ist, wie es in Figur 2 dargestellt ist. Dieser Vorsprung 8 überdeckt einen nicht weiter dargestellten Wellrippen-Rohr-Block des Wärmeübertragerblocks 2 nur soweit, dass der Spalt 4 zwischen Saugrohrgehäuse 1 und Wärmeübertragerblock 2 zuverlässig abgedichtet ist. Diese Ausführung ist besonders einfach, da auf Zusatzelemente, wie beispielsweise das Metallelement 5, verzichtet werden kann und trotzdem eine zuverlässige Abdichtung des Spaltes 4 gewährleitet wird.

Die durch den Vorsprung 8 gebildete Überlappung des Saugrohrgehäuses 1 vor dem Wärmeubertragerbiock 2 wird so gewählt, dass sich bei der druckbedingten Wölbung des Saugrohrgehäuses 1 infolge des Druckes des Arbeitsmediums 3 kein freier Spalt für das Arbeitsmedium 3 ergibt. Das heißt, auch bei einem leichten Verschieben des Saugrohrgehäuses 1 nach außen ist der Vorsprung 8 so dimensioniert, dass in einem solchen Extremfall der Spalt 4 jederzeit abgedichtet ist. Der den Wärmeübertragerblock 2 überlappende Vorsprung 8 des Saugrohrgehäuses 1 kann nicht nur auf der Eintrittsseite 14 des Arbeitsmediums 3 sondern auch auf der Austrittsseite 15 des Arbeitsmediums 3 vorgesehen werden, was gleichzeitig zu einer Arretierung des Wärmeübertragerblocks 2 im Saugrohrgehäuse 1 führt,

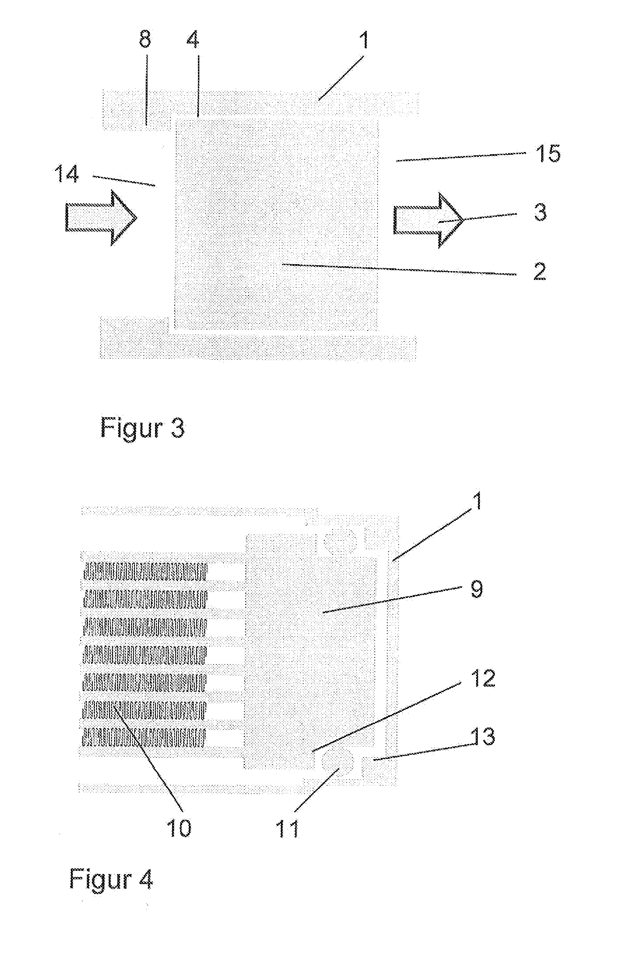

Der Vorsprung 8 gemäß Figur 2, welcher einstückig mit dem Saugrohrgehäuse 1 ausgebildet ist, verbreitert sich in Richtung des Wärmeübertragerblocks 2 und bildet somit einen podestähnlichen Absatz für den Wärmeübetragerblock 2. Eine einfachere Ausgestaltung dieses Vorsprungs 8 ist in Figur 3 dargestellt, wo der Vorsprung 8 rechteckähnlich mit einer konstanten Breite ausgebildet ist. Diese Variante ist besonders einfach gemeinsam mit dem Saugrohrgehäuse 1 herzustellen.

Der Wärmeübertragerblock 2 wird im Saugrohrgehäuse 1 auf zwei Lagern gehalten. Ein erstes Lager des Wärmeübertragerblocks 2 bildet ein Festlager, welches auf der Einschubseite des Wärmeübertragerblocks 2 ausgebildet ist. Dabei weist eine nicht weiter dargestellte Einschubleiste des Saugrohrgehäuses 1 einen Flansch auf, welcher mit dem Wärmeübertragerblock 2 verschraubt ist. Alternativ besteht die Möglichkeit, die Einschubleiste mit dem Wärmeübertragerblock 2 zu verschweißen.

Der Wärmeübertragerblock 2 besteht aus zwei Wasserkästen 9, von welchen in Figur 4 als Ausschnitt nur einer dargestellt ist. Zwischen den zwei Wasserkästen 9 erstreckt sich der Wellrippen-Rohr-Block 10, wobei in dem Wasserkasten 9 und in den Röhren des Wellrippen-Rohr-Blocks 10 ein Kühlmittel fließt, welches die von dem Arbeitsmedium 3 an die Wellrippen abgegebene Wärme aufnimmt und abführt. Der Wasserkasten 9 weist einen Absatz 12 zur Aufnahme eines O-Ringes 11 auf, welcher als Loslager dient (Figur 4) und auf den Wasserkasten 9 des Wärmeübertragerblocks 2 aufgeschoben ist, Der zur Auflage des O-Ringes 11 ausgebildete, umlaufende Absatz 12 weist dabei einen größeren Querschnitt auf, als der darüber liegende Teil des Wasserkastens 9. Der O-Ring 11 ist im Querschnitt rund und wird auf dem abgerundeten Wasserkasten 9 geschoben. Es kann aber auch ausreichend sein, dass nur die Ecken des Wasserkastens 9 abgerundet sind, um den O-Ring 11 besser zu montieren. Nach dem Aufschieben des O-Rings 11 hält sich dieser selbstständig beim Einschieben des Wärmeübetragerblocks 2 in das Saugrohrgehäuse 1. Der O-Ring 11 ist somit das Loslager des Wärmeübertragerblocks 2 und übernimmt Dämpfungsfunktionen. Der O-Ring 12 bildet die Fixierung des Wärmeübertragerblocks 2 in radialer Richtung in dem Saugrohrgehäuse 1 und stößt an einen Absatz 13 des Saugrohrgehäuses. In axialer Richtung gibt der O-Ring 11 dem Wärmeübertragerblock 2 die Freiheit, sich thermisch auszudehnen. Die axiale Lagersitzbreite zwischen dem Absatz 12 am Wasserkasten 9 und einem Absatz 13 des Saugrohrgehäuses 1 muss ausreichend groß dimensioniert werden, so dass der Wärimeübenragerblock 2 unter den gegebenen Produktionstoleranzen und der thermischen Ausdehnung nicht verspannt wird. Für den Einschub des Wärmeübertragerblocks 2 mit dem O-Ring 11 müssen entsprechende abgeschrägte Montagekanten am Loslagersitz vorgesehen werden.

## Patentansprüche

1. Saugrohrgehäuse mit einem integrierten Wärmeübertragerblock, der in dem Saugrohrgehäuse (1) angeordnet ist und von einem Arbeitsmedium (3) durchströmt wird, wobei das Saugrohrgehäuse (1) unter Ausbildung eines Spaltes (4) beabstandet zu dem Wärmeübertragerblock (2) angeordnet ist und der Spalt (4) gegenüber dem Arbeitsmedilim (3) verschlossen ist, **dadurch gekennzeichnet, dass** der Spalt (4) mit einem dichtungsfreien Spaltverschlusselement (6, 8) verschlossen ist.

2. Saugrohrgehäuse nach Anspruch 1, **dadurch gekennzeichnet, dass** das Spaltverschlusselement aus einer Abwinklung (6) eine, sich entlang des Wärmeübertragerblockes (2) erstreckenden Metallelementes (5) gebildet ist, wobei die Abwinklung (6) in eine Ausnehmung (7) des Saugrohrgehäuses (1) eingreift.

3. Saugrohrgehäuse nach Anspruch 2, **dadurch gekennzeichnet, dass** die Abwinklung (6) und/oder die Ausnehmung (7) des Saugrohrgehäuses (1) solche Abmessungen aufweisen, dass das Eingreifen der Abwinklung (6) in die Ausnehmung (7) des Saugrohrgehäuses (1) auch bei einer, durch einen Druck des Arbeitsmediums (3) bedingten Wölbung des Saugrohrgehäuses (1) gewährleistet ist,

4. Saugrohrgehäuse nach Anspruch 1, **dadurch gekennzeichnet, dass** das Spaltverschlusselement (8) aus dem Saugrohrgehäuse (1) gebildet ist, welches auf der Eintrittsseite (14) und/oder der Austrittsseite (15) des Arbeitsmediums (3) des Wärnieübettragerbloci<s (2) teilweise über den Wärmeübertragerblock (2) gezogen ist.

5. Saugrohrgehäuse nach Anspruch 4, **dadurch gekennzeichnet, dass** das Spaltvetschlusse!ement als Vorsprung (8) des Saugrohrgehäuses (1) ausgebildet ist, welcher teilweise ober einen Wellrippen-Rohr-Block (10) des Wärmeübertragerblocks (2) gezogen ist.

6. Saugrohrgehäuse nach Anspruch 1 bis 5, **dadurch gekennzeichnet, dass** der eine Lagerung des Wärmeübei-tragerblocks (2) an einer Einschubleiste des Saugrohrgehäuses (1) erfolgt" welche einen Flansch aufweist, mittels weichem das Saugrohrgehäuse (1) mit dem Wärmeiibertragerblock (2) verschraubt ist.

7. Saugrohrgehäuse nach Anspruch 1 bis 5, **dadurch gekennzeichnet, dass** die Lagerung des Wärmeübertragerblocks (2) an der, mit dem Wärmeübertragerblock (2) angespritzten Einschubleiste des Saugrohrgehäuses (1) erfolgt.

8. Saugrohrgehäuse nach mindestens einem der vorhergehenden Ansprüche, **dadurch gekennzeichnet, dass** der Wärmeübertragerblock einen Wasserkasten auf der Seite des Flansches (Festlager) besitzt und (2) einen zweiten Wasserkästen (9) zur Umlenkung des Kühlmediums aufweist, wobei der zweite Wasserkasten (9) von einem elastischen Dichtungsring (11) umspannt ist, welcher an dem Saugrohrgehäuse (1) anliegt und das Loslager für thermische Ausdehnungen des Wellrippen-Rohr-Blocks bildet,

9. Saugrohrgehäuse nach Anspruch 8, **dadurch gekennzeichnet, dass** der Loslager-Wasserkasten (9) zur Aufnahme des elastischen Dich" tungsringes (11) mindestens an seinen Ecken abgerundet oder rund ist.

10. Saugrohrgehäuse nach Anspruch 8 oder 9, **dadurch gekennzeichnet, dass** der elastische Dichtungsring (11) als O-Ring ausgebildet ist,
